(19) Europäisches Patentamt
European Patent Office
Office européen des brevets

(11) **EP 4 432 130 A1**

(12) **EUROPEAN PATENT APPLICATION**

(43) Date of publication:
**18.09.2024 Bulletin 2024/38**

(21) Application number: **24155143.1**

(22) Date of filing: **31.01.2024**

(51) International Patent Classification (IPC):
**G06F 16/9032** (2019.01)   **G06F 16/903** (2019.01)
**G06F 16/906** (2019.01)

(52) Cooperative Patent Classification (CPC):
**G06F 16/906; G06F 16/9032; G06F 16/90335**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **17.03.2023 US 202318186127**

(71) Applicant: **Meta Platforms Technologies, LLC**
**Menlo Park, CA 94025 (US)**

(72) Inventors:
 • **Taigman, Yaniv Nechemia**
  **Menlo Park (US)**

 • **Sheynin, Shelly**
  **Menlo Park (US)**
 • **Ashual, Oron**
  **Menlo Park (US)**
 • **Polyak, Adam**
  **Menlo Park (US)**
 • **Singer, Uriel**
  **Menlo Park (US)**
 • **Gafni, Oran**
  **Menlo Park (US)**
 • **Nachmani, Eliya**
  **Menlo Park (US)**

(74) Representative: **Murgitroyd & Company**
  **165-169 Scotland Street**
  **Glasgow G5 8PL (GB)**

(54) **TEXT TO IMAGE GENERATION USING K-NEAREST-NEIGHBOR DIFFUSION**

(57)   A method and system for text-to-image generation using a KNN-diffusion model. The method includes receiving a text input, and determining K nearest image embeddings to text embeddings of the text input from a dataset in an embedding space, the embedding space being, for example, a CLIP embedding space. The method also includes concatenating the text embedding and the K nearest image embeddings. The method also includes mapping the concatenated embeddings into a feature space and generating an image associated with the input text based on the feature space. The feature space being, for example, a joint multi-modal text-image space.

FIG. 6

EP 4 432 130 A1

**Description**

TECHNICAL FIELD

The present disclosure is generally related to an adaptive artificial intelligence (AI) image generation model trained on image datasets. More specifically, the present disclosure includes generating an image, sticker, animation, or the like in response to a text input using a K-Nearest-Neighbors (KNN) diffusion.

BACKGROUND

Recently, large-scale generative networks have been applied for generating hyper-realistic images from text. These text-to-image models show zero-shot capabilities. However, these models require large web-scale paired text-image datasets and a large number of parameters (e.g., billions). Current text-to-image generation frameworks typically use paired text-image datasets to train a model of the framework. Some text-to-image generation frameworks may not require paired text-image datasets by using joint text-image embeddings of a pre-trained model interchangeably at training and inference. However, the gap between the text and image distributions in the joint embeddings space results in substantially lower quality results. Noise may be added to the image embedding during training (making the image and text distributions similar to one another via noise) to help with the gap. However, these models are lacking control and consistency, compared to image search for instance. As such, a more accessible and adaptable generation model is needed.

SUMMARY

The subject disclosure provides for systems and methods for text-to-image generation using a KNN-diffusion model. In one aspect of the present disclosure, the method includes receiving a text input, determining K nearest image embeddings to text embeddings of the text input from a dataset in an embedding space, concatenating the text embedding and the K nearest image embeddings, mapping the concatenated embeddings into a feature space, and generating an image associated with the text input based on the feature space.

In some embodiments, the computer-implemented method further comprises extracting a text embedding from the text input.

In some embodiments, the dataset is a sticker dataset and the image is a sticker associated with the text input.

In some embodiments, the computer-implemented method further comprises determining the K nearest image embeddings from image samples in the dataset based on an index, wherein the image samples are indexed by a fast KNN-search.

In some embodiments, the computer-implemented method further comprises encoding the text input using a pre-trained text encoder to generate the text embedding.

In some embodiments, the K nearest image embeddings are retrieved from K nearest images in a Contrastive Language-Image Pretraining (CLIP) embedding space.

In some embodiments, the feature space is a joint multi-modal text-image space.

In some embodiments, the computer-implemented method further comprises initializing the image embedding with a mask token.

In some embodiments, the computer-implemented method further comprises training the KNN-diffusion model, wherein the training comprises: sampling an input image based on a sample time step; determining K nearest image embeddings to the input image from a training dataset; and concatenating an input image embedding and the K nearest image embeddings to the input image.

In some embodiments, the computer-implemented method further comprises: generating conditional image logits based on a desired multi-modal embedding and unconditional image logits based on a null embedding; and sampling the input image based on the conditional image logits, the unconditional image logits, and a scaling coefficient.

Another aspect of the present disclosure relates to a system configured for text-to-image generation using a KNN-diffusion model. The system includes one or more processors, and a memory storing instructions which, when executed by the one or more processors, cause the system to perform operations. The operations include to receive a text input, extract a text embedding from the text input, determine K nearest image embeddings to the text embedding from a dataset in an embedding space, concatenate the text embedding and the K nearest image embeddings, map the concatenated embeddings into a feature space, and generate an image associated with the text input based on the feature space.

In some embodiments, the feature space is a joint multi-modal text-image space.

In some embodiments, the dataset is a sticker dataset and the image is a sticker associated with the text input.

In some embodiments, the one or more processors further execute instructions to determine the K nearest image embeddings from image samples in the dataset based on an index, wherein the image samples are indexed by a fast KNN-search.

In some embodiments, the one or more processors further execute instructions to encode the text input using a pre-trained text encoder to generate the text embedding.

In some embodiments, the K nearest image embeddings are retrieved from K nearest images in a Contrastive Language-Image Pretraining (CLIP) embedding space.

In some embodiments, the one or more processors further execute instructions to initialize the image embedding with a mask token.

In some embodiments, the one or more processors further execute instructions to train the KNN-diffusion model, the instructions causing the system to: sample an input image based on a sample time step; determine K nearest image embeddings to the input image from a training dataset; and concatenate an input image embedding and the K nearest image embeddings to the input image.

In some embodiments, the one or more processors further execute instructions to: generate conditional image logits based on a desired multi-modal embedding and unconditional image logits based on a null embedding; and sample the input image based on the conditional image logits, the unconditional image logits, and a scaling coefficient.

Yet another aspect of the present disclosure relates to a non-transient computer-readable storage medium having instructions embodied thereon, the instructions being executable by one or more processors to perform a method(s) for text-to-image generation using a KNN-diffusion model and cause the one or more processors to receive a text input, extract a text embedding from the text input, determine K nearest image embeddings to the text embedding from a dataset in an embedding space, concatenate the text embedding and the K nearest image embeddings, map the concatenated embeddings into a feature space (for example a joint multi-modal text-image space), and generate an image associated with the text input based on the feature space (for example the joint multi modal text-image space). The dataset may be a sticker dataset and the image may be a sticker based on the received text input.

It will be appreciated that any features described herein as being suitable for incorporation into one or more aspects or embodiments of the present disclosure are intended to be generalizable across any and all aspects and embodiments of the present disclosure. These and other embodiments will be evident from the present disclosure. It is understood that other configurations of the subject technology will become readily apparent to those skilled in the art from the following detailed description, wherein various configurations of the subject technology are shown and described by way of illustration. As will be realized, the subject technology is capable of other and different configurations and its several details are capable of modification in various other respects, all without departing from the scope of the subject technology. Accordingly, the drawings and detailed description are to be regarded as illustrative in nature and not as restrictive.

BRIEF DESCRIPTION OF THE DRAWINGS

FIG. 1 is a diagram of an environment 100 in which methods, apparatuses and systems described herein may be implemented, according to some embodiments.

FIG. 2 is a block diagram illustrating an overall framework of a system, according to some embodiments.

FIGS. 3A-3B are an illustration of distributions during a training stage and an inference stage, respectively, according to some embodiments. FIG. 4 illustrates a probability transition matrix, according to some embodiments.

FIG. 5 illustrates a block diagram of an inference apparatus for text-to-image generation using a KNN-diffusion model, according to some embodiments.

FIG. 6 illustrates a flowchart of a method for text-to-image generation using a KNN-diffusion model (at inference), according to some embodiments.

FIGS. 7A-7B are example illustrations of qualitative evaluations of the text-to-image generation methods.

FIGS. 8A-8B are example illustrations of qualitative evaluations of the text-to-sticker generation methods.

FIG. 9 is a block diagram illustrating a computer system used to at least partially carry out one or more of operations in methods disclosed herein, according to some embodiments.

In the figures, elements having the same or similar reference numerals are associated with the same or similar attributes, unless explicitly stated otherwise.

DETAILED DESCRIPTION

In the following detailed description, numerous specific details are set forth to provide a full understanding of the present disclosure. It will be apparent, however, to one ordinarily skilled in the art, that the embodiments of the present disclosure may be practiced without some of these specific details. In other instances, well-known structures and techniques have not been shown in detail so as not to obscure the disclosure.

General Overview

The availability of massive Text-Image datasets is useful in training large-scale generative models (e.g., denoising diffusion probabilistic models (DDPMs), Transformers), These text-to-image models depends on the quality of both the input text, as well as the training dataset. Using generative models requiring large web-scale paired Text-Image datasets and a large number of parameters is not very accessible and consumes a lot of resources. Large autoregressive models run more than a thousand times successively to generate visual tokens, which is inefficient, time consuming even on a high-end GPU and a waste of computing resources. The tradeoff between generalization and memorization is also unclear. Additionally, when dealing with limited data, it is unclear how to adapt a generative Text-To-Image model to new datasets and domains where the data is scarce, weakly or noisy labeled, with vastly different text and image distributions. It is also impractical to train largescaled datasets of text-image pairs on new domains where data is scarce or not labeled. Thus, these image generation models are not practical to run at scale and with shorter latency and lacking control and consistency.

Embodiments of this disclosure describe a KNN-Diffusion text-to-image generation model. The KNN-Diffusion implements a large-scale retrieval method, in particular efficient K-Nearest-Neighbors (KNN) search, used to train the model to adapt to new samples. Learning to adapt enables several new capabilities and can alleviate the need to train or memorize an adequately large generative model. Additionally, fine-tuning trained models to new samples can be achieved by simply adding them to the table. In this manner, rare concepts, even without any presence in the training set, can be then leveraged during inference without any modification to the generative model. The diffusion-based model, according to embodiments, trains on images only by leveraging a joint Text-Image multi-modal metric to achieve state of the art results in (a) subjective human evaluations and (b) perceptual scores - all with a lower number of diffusion steps, hence reducing generation time significantly. This capability can also bridge different Text-Image datasets, such as finetuning and few-shot learning in a new domain given new samples. Moreover, in datasets where some or all of the paired textual data is missing or noisy, a j oint Text-Image multi-modal induced metric is leveraged and trained only on images to accurately generate images from a novel text prompt (i.e., text input). To remedy the gap between the text prompt and image distributions in the joint embeddings space, an actual image embedding is retrieved which is then used to condition an image generator of the model.

The KNN search is an integral part of the diffusion process of the image generation model. As described, the model is trained to adapt to new samples it has access to externally. Given a user query, the model retrieves the KNN between the query and the entities in a database (DB) in some pre-calculated embedding space. While adding more data to the DB may improve performance, it comes at a high cost to the system as it requires collecting and training on more data. Retrieval models enable using a larger dataset than the one used for training and retrieving the right information for any given query. Analogous to queries from a user, a model can issue a query, enabling it to leverage extensive world-knowledge for its specific task. Retrieval models may be used for various tasks in learning problems, for example, language modeling, machine translation, question answering, and image generation.

According to embodiments, the KNN retrieval model is utilized over the shared Text-Image embedding space using contrastive language-image pretraining (CLIP). CLIP is a neural network which learns visual concepts from natural language supervision. The KNN retrieval mechanism largely impacts performance at both training and inference of the model.

Learning a single modality feature space has high importance as it creates a semantic representation of a modality. Learning a joint and aligned feature space for several modalities is challenging, as it requires alignment between the modalities (paired datasets), and their distributions may vary. Some models learn a joint representation by leveraging both a paired dataset, and a much larger image-only dataset, using self-supervised techniques. Some employ both contrastive and multimodal training objectives on paired and image-only datasets. Using joint representation, models hold a strong semantic alignment between the two modalities, enabling, *e.g.,* image generation, image manipulation, and image captioning. Methods and systems of embodiments leverage the joint representation in two ways: (i) enabling text-less training, using only visual data, while using text at inference time, and (ii) as the embedding space used in the retrieval model.

In some embodiments, images are modeled as a sequence of discrete tokens using a vector-quantized variational auto-encoder (VQ-VAE) as an image tokenizer. The VQ-VAE consists of an encoder, a learned codebook, and a decoder. Given an image, the encoder extracts a latent representation. Then, the codebook maps each latent vector representation to its nearest vector in the codebook. Finally, the decoder reconstructs the image from the codebook representation. The VQVAE is trained with reconstruction and codebook learning objectives. A Vector Quantized Diffusion model (VQ-Diffusion) uses, in part, the VQ-VAE to generate an image based on text and improves the generation results. The KNN-Diffusion model, according to embodiments, modifies the VQDiffusion architecture to be able to receive the KNNs during both training and inference.

Embodiments, as disclosed herein, provide a solution rooted in computer technology and arising in the realm of computer networks, namely accurately generating images from novel text using an adaptive model. The disclosed subject technology further provides improvements to the functioning of the computer itself because it allows the computer to use less memory which results in faster computation time. Accordingly, improving the technological field of image generation as well as user experience by producing quality, faithful images while increasing efficiency. Further, image generation models/methods according to embodiments also utilize reduced datasets and adapt to new samples, which are only observed during test time (inference) by combining a large-scale diffusion-based generative model with a large-scale K-Nearest Neighbor search.

Example Architecture

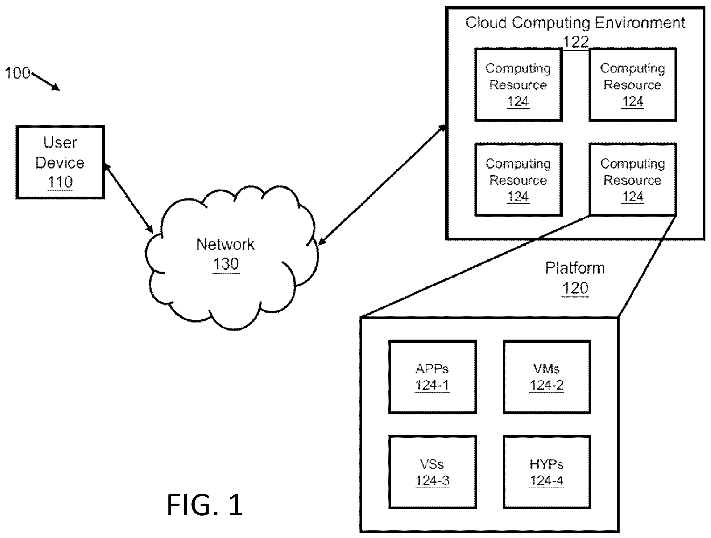

FIG. 1 is a diagram of an environment 100 in which methods, apparatuses and systems described herein may be implemented, according to embodiments.

As shown in FIG. 1, the environment 100 may include a user device 110, a platform 120, and a network 130. Devices of the environment 100 may interconnect via wired connections, wireless connections, or a combination of wired and wireless connections.

The user device 110 includes one or more devices capable of receiving, generating, storing, processing, and/or providing information associated with platform 120. For example, the user device 110 may include a computing device (*e.g.,* a desktop computer, a laptop computer, a tablet computer, a handheld computer, a smart speaker, a server, etc.), a mobile phone (*e.g.,* a smart phone, a radiotelephone, etc.), a headset or other wearable device (*e.g.,* virtual reality or augmented reality headset, smart glasses, a smart watch), or a similar device. In some implementations, the user device 110 may receive information from and/or transmit information to the platform 120 via the network 130.

The platform 120 includes one or more devices as described elsewhere herein. In some implementations, the platform 120 may include a cloud server or a group of cloud servers. In some implementations, the platform 120 may be designed to be modular such that software components may be swapped in or out. As such, the platform 120 may be easily and/or quickly reconfigured for different uses.

In some implementations, as shown, the platform 120 may be hosted in a cloud computing environment 122. Notably, while implementations described herein describe the platform 120 as being hosted in the cloud computing environment 122, in some implementations, the platform 120 may not be cloud-based (*i.e.,* may be implemented outside of a cloud computing environment) or may be partially cloud-based.

The cloud computing environment 122 includes an environment that hosts the platform 120. The cloud computing environment 122 may provide computation, software, data access, data storage (e.g., a database), etc., services that do not require end-user (*e.g.,* the user device 110) knowledge of a physical location and configuration of system(s) and/or device(s) that hosts the platform 120. As shown, the cloud computing environment 122 may include a group of computing resources 124 (referred to collectively as "computing resources 124" and individually as "computing resource 124").

The computing resource 124 includes one or more personal computers, workstation computers, server devices, or other types of computation and/or communication devices. In some implementations, the computing resource 124 may host the platform 120. The computing resource 124 may include an application programming interface (API) layer, which controls applications in the user device 110. API layer may also provide tutorials to users of the user device 110 as to new features in the application. The cloud resources may include compute instances executing in the computing resource 124, storage devices provided in the computing resource 124, data transfer devices provided by the computing resource 124, etc. In some implementations, the computing resource 124 may communicate with other computing resources 124 via wired connections, wireless connections, or a combination of wired and wireless connections.

As further shown in FIG. 1, the computing resource 124 includes a group of cloud resources, such as one or more applications ("APPs") 124-1, one or more virtual machines ("VMs") 124-2, virtualized storage ("VSs") 124-3, one or more hypervisors ("HYPs") 124-4, or the like.

The application 124-1 includes one or more software applications that may be provided to or accessed by the user device 110 and/or the platform 120. The application 124-1 may eliminate a need to install and execute the software applications on the user device 110. For example, the application 124-1 may include software associated with the platform 120 and/or any other software capable of being provided via the cloud computing environment 122. In some implementations, one application 124-1 may send/receive information to/from one or more other applications 124-1, via the virtual machine 124-2. The application 124-1 may include one or more modules configured to perform operations according to aspects of embodiments. Such modules are later described in detail.

The virtual machine 124-2 includes a software implementation of a machine (*e.g.,* a computer) that executes programs like a physical machine. The virtual machine 124-2 may be either a system virtual machine or a process virtual machine, depending upon use and degree of correspondence to any real machine by the virtual machine 124-2. A system virtual machine may provide a complete system platform that supports execution of a complete operating system ("OS"). A process virtual machine may execute a single program, and may support a single process. In some implementations, the virtual machine 124-2 may execute on behalf of a user *(e.g.,* the user device 110), and may manage infrastructure of the cloud computing environment 122, such as data management, synchronization, or long-duration data transfers.

The virtualized storage 124-3 includes one or more storage systems and/or one or more devices that use virtualization techniques within the storage systems or devices of the computing resource 124. Virtualized storage 124-3 may include storing instructions which, when executed by a processor, causes the computing resource 124 to perform at least partially one or more operations in methods consistent with the present disclosure. In some implementations, within the context of a storage system, types of virtualizations may include block virtualization and file virtualization. Block virtualization may refer to abstraction (or separation) of logical storage from physical storage so that the storage system may be accessed without regard to physical storage or heterogeneous structure. The separation may permit administrators of the storage system flexibility in how the administrators manage storage for end users. File virtualization may eliminate dependencies between data accessed at a file level and a location where files are physically stored. This may enable optimization of storage use, server consolidation, and/or performance of non-disruptive file migrations.

The hypervisor 124-4 may provide hardware virtualization techniques that allow multiple operating systems (*e.g.,* "guest operating systems") to execute concurrently on a host computer, such as the computing resource 124. The hypervisor 124-4 may present a virtual operating platform to the guest operating systems, and may manage the execution of the guest operating systems. Multiple instances of a variety of operating systems may share virtualized hardware resources.

The network 130 can include, for example, any one or more of a local area network (LAN), a wide area network (WAN), the Internet, and the like. Further, network 130 can include, but is not limited to, any one or more of the following network topologies, including a bus network, a star network, a ring network, a mesh network, a star-bus network, tree or hierarchical network, and the like.

The number and arrangement of devices and networks shown in FIG. 1 are provided as an example. In practice, there may be additional devices and/or networks, fewer devices and/or networks, different devices and/or networks, or differently arranged devices and/or networks than those shown in FIG. 1. Furthermore, two or more devices shown in FIG. 1 may be implemented within a single device, or a single device shown in FIG. 1 may be implemented as multiple, distributed devices. Additionally, or alternatively, a set of devices (*e.g.,* one or more devices) of the environment 100 may perform one or more functions described as being performed by another set of devices of the environment 100.

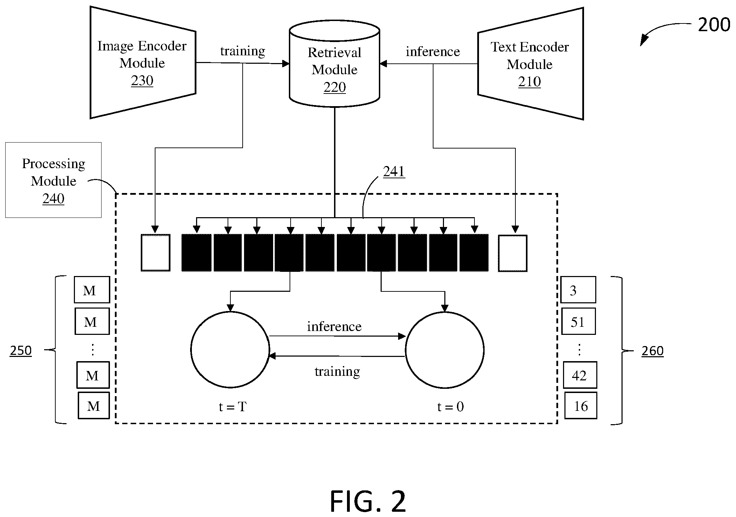

FIG. 2 a block diagram illustrating an overall framework of a system 200 used to generate an image based on a text input through KNN-Diffusion, according to one or more embodiments. Accordingly, the system 200 utilizes a KNN-diffusion model including one or more models/module. The system 200 includes aspects for training and inference stages of KNN-Diffusion in an image generation network. The system 200 may include computing platform(s) that may be configured by machine-readable instructions. Machine-readable instructions may include one or more instruction modules. The instruction modules may include computer program modules. The instruction modules may include one or more of a text encoder 210, retrieval module 220, image encoder 230, and processing module 240, and/or other instruction modules.

In some implementations, one or more of the modules 210, 220, 230, and 240 may be included in the user device 110 and performed by one or more processors. In some implementations, one or more of the modules 210, 220, 230, and 240 may be included in the cloud computing environment 122 and performed via the platform 120. In some implementations, one or more of the modules 210, 220, 230, and 240 are included in and performed by a combination of the user device and the cloud computing environment.

The KNN-diffusion model is conditioned on two inputs: (1) image embedding (at training time) or text embedding (at inference), extracted using a multi-modal CLIP encoder, and (2) KNN embeddings, representing the k most similar images in the CLIP latent space. During training, assuming no paired text is available, the image embeddings are selected using the retrieval model (i.e., the retrieval module 220). At inference, only text inputs are given, so instead of image embeddings, the text embedding that shares a joint embedding space with the image embeddings are used. Thus, the KNN image embeddings are retrieved using the text embeddings.

Using KNN image embeddings have three main benefits: (1) they extend the distribution of conditioning embeddings and ensure the distribution is similar in train and inference, thus helping to bridge the gap between the image and text embedding distributions; (2) they teach the model to learn to generate images from a target distribution by using samples from that distribution, thus allowing generalization to different distributions at test time and generating out-of-distribution samples; (3) they hold information that does not need to be present in the model, which allows it to be substantially smaller.

Given an input text $t$, the text encoder 210 is a trained encoder configured to encode the input text $t$ and generate text embeddings. Given image samples, the image encoder 230 is a trained encoder configured to encode an image sample $I$ and generate image embeddings. The image samples may be retrieved from a dataset in a pre-calculated embedding space. In some implementations, the pre-calculated embedding space is Contrastive Language-Image Pretraining (CLIP) embedding space. The text encoder 210 and image encoder 230 map text inputs and image samples into a joint multi-modal feature space $H$. In some implementations, the text encoder 210 and image encoder 230 generate text descriptions and extract image descriptions from the text inputs and image samples, respectively, and map the input texts and the image samples based on the text/image descriptions.

The retrieval module 220 retrieves K nearest-neighbors (KNN) images between the input text and entities (i.e., image samples) in the DB in the CLIP embedding space. The entities in the DB may be indexed and searched during retrieval. In some embodiments, KNN image embeddings are extracted from the KNN images retrieved in the CLIP embedding space.

The processing module 240 performs KNN-diffusion (i.e., using a KNN-Diffusion model). During the training stage, a diffusion-based Transformer backbone of the KNN-Diffusion is conditioned on an input image embedding $f_{img}(I)$ (i.e., an image sample) and its KNN images in the joint multi-modal feature space $H$. Similarly, at the inference stage, the KNN-Diffusion is conditioned on the input text embedding $f_{txt}(t)$ and the KNN images. The processing module 240 may include one or more of an image tokenizer, a multi-modal Text-Image encoder, a data structure containing image embeddings, and a trainable diffusion-based vector-quantized (VQ) image generation model. The image tokenizer is based on a discrete VQ encoder-decoder network. The image embeddings are indexed using a fast KNN search. The backbone of the image generation model is a Transformer network that is conditioned on the projected retrievals.

First, the processing module 240 trains a diffusion-based image generation model G, with parameters $\Theta$. The image generation model G (instead of being conditioned on the text embedding $f_{txt}(t)$) fetches the KNN image embeddings 241 (of the KNN images retrieved by the retrieval module 220) denoted by $\{f_{img}(I)\}_{k=1}^{K}$ of $f_{img}(I)$ in the joint multi-modal feature space $H$, where $\{i_k\}_{k=1}^{K}$ is an index given by a fast KNN search. Text-image pairs may be indexed in the joint multimodal feature space H, for example, when the pair is mapped into the j oint multi-modal feature space $H$ (hereafter "space $H$"). In some implementations, the pair is manually labeled. According to some embodiments, during training, the input is masked and the output is predicted based on the KNN diffusion model. As shown in FIG. 2, at least some of the input is masked (represented by masked tokens 250) and outputs 260 are predicted.

In some implementations, the image $I \in \mathbb{R}^{H \times W \times 3}$ to be generated given the exact text input $t \in N^l$ already exists. That is, a text-image pair ($I$, t) has been labeled and can be fetched from the joint multi-modal feature space $H$ using an index.

According to some embodiments, the KNN-diffusion process is stochastic. As such, KNN image embeddings are randomly determined, and thus will result in a different output for every input text, search, or query. In some implementations, outputs may be stored in relation to a corresponding input. Accordingly, making the KNN-diffusion process deterministic and selecting a stored output based on, for example, a match between a current text input.

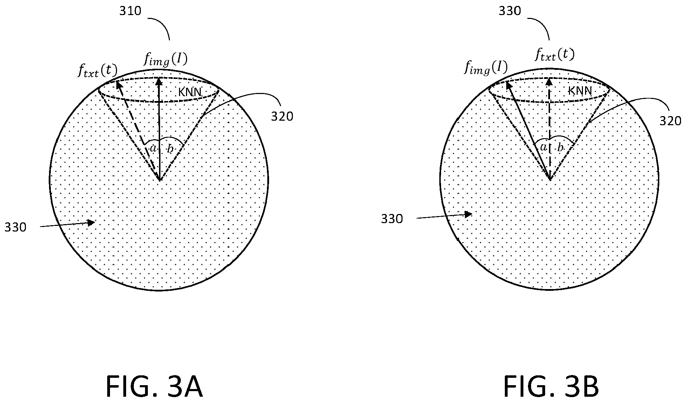

FIG. 3A is an illustration of distributions of embeddings during the training stage, according to one or more embodiments. FIG. 3B is an illustration of distributions of embeddings during the inference stage, according to one or more embodiments. The spherical region represents the CLIP latent embedding space 330. The distributions of FIG. 3A and FIG. 3B may be implemented by the processing module 240 or some other module.

As described, according to one or more embodiments, CLIP is used as the embedding space encoder of the KNN-Diffusion image generation model. A cosine similarity metric in the space H is used to select the nearest neighbors out of all images in a dataset D. The dataset D contains images from the CLIP embedding space. According to embodiments, the CLIP embedding of all of images are computed and stored in the dataset D. During the training stage, only the images (with no text) are given to the processing module 240. As such, the KNN-Diffusion model is conditioned on an image CLIP embedding and its KNN. During the inference stage, only the texts are given. As such, the image condition is generated based on input text (e.g., given by a user) and its KNN retrieved from the same dataset D of images. This may cause a shift in distribution during inference. To bridge the gap between the two distributions, instead of adding noise in order to make the text and image distributions similar to one another, during the training stage, the processing module 240 adds the image embeddings of real images (*e.g.,* the KNN images) retrieved using the retrieval module 220 to the input image embeddings corresponding to the input image sample $I$. The retrieved KNN images have a large distribution and, therefore, cover the potential text embedding. In this manner, all the embeddings are used as input, thus advantageously allowing access to real data points during the generative process.

As shown in FIG. 3A, during the training stage, only the image 310 is given and the KNNs are leveraged to bridge between the image and text distributions. The KNNs have a large distribution 320 (indicated by the dashed cone) to cover the potential text embedding (i.e., $\cos(b_1) > \cos(a_1)$). As shown in FIG. 3B, during the inference stage, the opposite is applied. That is, only the text 330 is given and the KNNs are retrieved using the text embedding.

According to embodiments, a modified version of a VQ-Diffusion model may be used to generate an output image. Unlike the original VQ-Diffusion model, the system 200 introduces the retrieval mechanism (via the retrieval module 220) at both training and inference stages, and the utilization of classifier-free guidance (CFG). Images are modeled as a sequence of discrete tokens using a vector-quantized variational auto-encoder (VQVAE) as the image tokenizer. The VQ-VAE consists of an encoder, a learned codebook, and a decoder. Indices $x_n \in \{1, ..., V\}^{h \times w}$ of the allocated codebook vectors are extracted by a pre-trained VQGAN encoder. According to embodiments, the forward process of a diffusion model $q(x_n|x_{n-1})$ is a Markov chain that adds noise at each step. Moreover, the reverse process $q(x_{n-1}|x_n, x_0)$ is a denoising process that removes noise from an initialized noise state. The forward process is given by Equation (1) as follows:

$$q(x_n|x_{n-1}) = v^T(x_n)Q_n v(x_{n-1}) \qquad \text{Equation (1)}$$

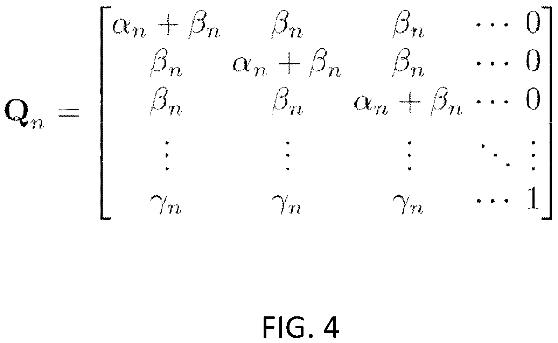

where $v(x_n)$ is a one-hot vector with entry 1 at index $x_n$, and $Q_n$ is the probability transition matrix from state $x_{n-1}$ to $x_n$. FIG. 4 is an example of the matrix $Q_n$, according to one or more embodiments. Referring to FIG. 4, $\alpha \in [0,1]$, $\beta_n = (1 - \alpha_n - \gamma_n)/V$ and $\gamma_n$ is the probability of a token being replaced with a [MASK] token. The reverse diffusion process is given by the posterior distribution, defined by Equation (2):

$$q(x_{n-1}|x_n, x_0) = \frac{(v^T(x_n)Q_n v(x_{n-1}))(v^T(x_{n-1})\bar{Q}_{n-1} v(x_0))}{v^T(x_n)\bar{Q}_n v(x_0)} \qquad \text{Equation (2)}$$

where $\overline{Q}_n = Q_n ... Q_1$.

In some implementations, the reverse diffusion process can also be conditioned on a signal y, $q(x_{n-1}|x_n,y)$, and can be estimated by a model $p_\theta(x_{n-1}|x_n,y)$, when using a Transformer autoencoder architecture. The condition signal y is obtained by concatenating the input image embedding $f_{img}(I)$, and its K nearest neighbor's vectors in the embedding space $\{f_{img}(I_{i_k})\}_{k=1}^K$. This may be represented by Equation (3):

$$y = \{f_{img}(I), f_{img}(I_{i_1}), ..., f_{img}(I_{i_k})\} \qquad \text{Equation (3)}$$

where $y \in \mathbb{R}^{k+1 \times d}$. In a training procedure, the loss function may be represented as a combination of $L_0$, $L_{n-1}$, and $L_{xo}$.

According to embodiments, local and semantic manipulations that are based on CLIP and the KNN-diffusion model are employed, without relying on user-provided masks by fine-tuning the model to perform local and complex modifications that satisfies a given target text prompt. For example, given and image and a target text, methods according to embodiments automatically locates a local region within the image that should be modified and synthesizes a high-resolution manipulated image in which (1) the identity is accurately preserved and (2) the manipulation is aligned with the target text. For example, during training, given a training image, the model extracts its first nearest neighbor. Then, a random local area in the training image is selected, and the manipulated image is constructed by replacing the area with the corresponding nearest neighbor. The model then receives as input the manipulated image and the clip embedding of the local area that needs to be restored and processed by the KNN-diffusion model to generate an output image.

A training procedure for training an image generation network using KNN-diffusion, according to one or more embodiments, may be performed according to a training procedure algorithm. The training algorithm may include the steps detailed below in Table 1.

Table 1: Training Algorithm

| 1: | Input: A training image dataset $I_D$, a pre-trained image encoder $f_{img}$, an image tokenizer E, a learning rate $\eta$, a maximum number of diffusion steps N, and a loss weighting coefficient $\varepsilon_1$. |
|---|---|

(continued)

| 2: | Store all dataset embeddings of the image dataset $I_D$ (i.e., $\{d_i = f_{img}(I_i)\}_{i=1}^N$) in a datastructure $D$ |
|---|---|
| 3: | **repeat** |
| 4: | Sample an image $I$ |
| 5: | // Get the K nearest neighbors in the image embedding space using a KNN-search: |
| 6: | $\{d_1, ..., d_K\}$ = KNN-search($f_{img}(I),D,K$) |
| 7: | // Concatenate the image embeddings |
| 8: | $y = (f_{img}(I), d_1, ..., d_K)$ |
| 9: | // Get tokens from a VQGAN-encoder (image tokenizer) |
| 10: | $x_0 = E(I)$ |
| 11: | Sample time step: n ~ Uniform($\{1, \blacksquare\ \blacksquare\ \blacksquare\ ,N\}$) |
| 12: | Sample $x_n$ from the forward process $q(x_n|x_0)$ |
| 13: | **if n = 1 then** |
| 14: | $L = L_0$ |
| 15: | **else** |
| 16: | $L = L_{n-1} + \varepsilon_{\boldsymbol{\iota}}\ L'_{X0}$ |
| 17: | **end if** |
| 18: | $\theta \leftarrow \theta - \eta \nabla_\theta L$ |
| 19: | until converged |

The image embeddings $f_{img}$ for all the images in the dataset may be generated using the pretrained image encoder.

The training algorithm may be performed by, for example, system 200. Modules of the system 200 may be configured to train an image generation network according to the training algorithm.

During inference, given a query text t, an embedding $f_{txt}(t)$ is extracted. Next, the K nearest neighboring vectors $d_1, ..., d_K$ in the image embedding space are retrieved. The condition vector y for the diffusion model is a concatenation of the embedding vector $f_{txt}(t)$ and the K nearest vectors $d_1, ..., d_K$, as given by Equation (4):

$$y = \{f_{txt}(t), d_1, ..., d_K\} \qquad \text{Equation (4)}$$

Then, starting from the [MASK] vector, and for N steps, $x_{n-1}$ is estimated given $x_n$ and y using the trained diffusion process. In some embodiments, for example, given an input image and a text query "A face of a male child", the model receives as input an image from a dataset D and the clip embedding of the modifying text to generate a manipulated output image. An inferencing procedure for inference of the image generation network using KNN-diffusion, according to one or more embodiments, may be performed according to an inference algorithm. The inference algorithm may include the steps detailed below in Table 2.

Table 2: Inference Algorithm

| 1: | Input: Query text t, a dataset D of pre-processed image embeddings $\{d\}_{i=1}^N$, pre-trained text encoder $f_{txt}$, and image de-tokenizer decoder $D_T$. |
|---|---|
| 2: | // Get the K nearest neighbors in the image embedding space using a KNN-search: |
| 3: | $\{d_1, ..., d_K\}$ = KNN-search($f_{txt}(t),D,K$) |

(continued)

| 4: | // Concatenate text embedding and image embeddings |
|---|---|
| 5: | $y = (f_{txt}(t), d_1, ..., d_K)$ |
| 6: | // Initialize image with mask tokens |
| 7: | $x_n \leftarrow [MASK]^{h \times w}$ |
| 8: | $n \leftarrow N$ |
| 9: | **while** $n > 0$ **do** |
| 10: | $x_{n-1} \leftarrow$ sample from $p_\theta(x_{n-1} | x_n, y)$ |
| 11: | $n \leftarrow n - 1$ |
| 12: | **end while** |
| 13: | $I' = D_T(x_0)$ // decode and output image |

As described, the system 200 introduces the retrieval mechanism at both training and inference stages, and the utilization of classifier-free guidance (CFG). The KNN-diffusion model is sampled using the CFG by extrapolating an unconditional sample in the direction of a conditional sample. To support unconditional sampling, models may be finetuned with, for example, 20% of the conditional features nullified. Thereby, enabling unconditional image sampling from the model by using the null condition $y' = \vec{0}$, the null vector). However, by conditioning the model on a null vector, the cross-attention component is nullified as well, resulting in no contribution to the diffusion process.

According to embodiments, unconditional samples may be generated from the KNN-diffusion model using null conditioning without finetuning the model. During inference, in each step of the diffusion process, two images are generated: conditional image logits, $p_\theta(x_{n-1}|x_n, y)$, conditioned on the desired multi-modal embedding $y$, and the unconditional image logits, $p_\theta(x_{n-1}|x_n, y')$, conditioned on the null embedding. Then, the final image for a diffusion step $n$ is sampled from:

$$p_\theta(x_{n-1}|x_n, y) = p_\theta(x_{n-1}|x_n, y') + \lambda(p_\theta(x_{n-1}|x_n, y) - p_\theta(x_{n-1}|x_n, y')) \qquad \text{Equation (5)}$$

where $\lambda$ is a scale coefficient. Therefore, according to embodiments, extrapolation directly occurs on the logits outputted by $p_\theta$ instead of on pixel values or the like. In some implementations, during inference, $\lambda$ is set to 8, which yields the highest FID scores in a validation set.

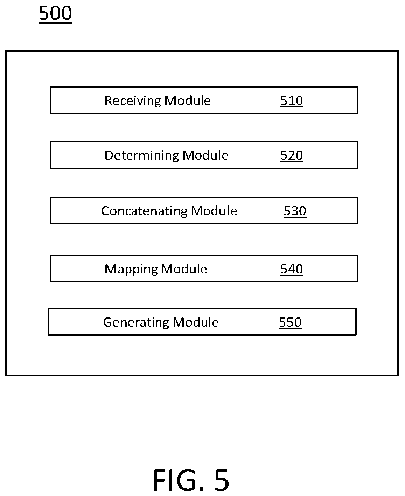

FIG. 5 is a block diagram of an inference apparatus 500 for text-to-image generation using a KNN-diffusion model, according to one or more embodiments. The apparatus 500 may include computing platform(s) which may be configured by machine-readable instructions. Machine-readable instructions may include one or more instruction modules. The instruction modules may include computer program modules. As shown in FIG. 5, the instruction modules may include one or more of a receiving module 510, determining module 520, concatenating module 530, mapping module 540, and generating module 550, and/or other instruction modules.

In some implementations, one or more of the modules 510, 520, 530, 540, and 550 may be included in the user device 110. In some implementations, one or more of the modules 510, 520, 530, 540, and 550 may be included in cloud computing environment 122 and performed via the platform 120. In some implementations, one or more of the modules 510, 520, 530, 540, and 550 are included in and performed by a combination of the user device and the cloud computing environment.

The receiving module 510 is configured to receive a text input. The apparatus 500 may further include extracting a text embedding from the text input. The text input may be encoded using a pre-trained text encoder to generate the text embedding.

The determining module 520 is configured to determine K nearest image embeddings to text embeddings of the text input from a dataset in an embedding space. The K nearest image embeddings may be determined from image samples in the dataset based on an index, wherein the image samples are indexed by a fast KNN-search. The embedding space may be a CLIP embedding space.

The concatenating module 530 is configured to concatenate the text embedding and the K nearest image embeddings. The apparatus may further include initializing the image embedding with a mask token.

The mapping module 540 is configured to map the concatenated embeddings into a feature space. The feature space may be a joint multi-modal text-image space.

The generating module 550 is configured to generate an image associated with the input text based on the feature space.

Although FIG. 5 shows example blocks of the apparatus 300, in some implementations, the apparatus 500 may include additional blocks, fewer blocks, different blocks, or differently arranged blocks than those depicted in FIG. 5. Additionally, or alternatively, two or more of the blocks of the system may be combined.

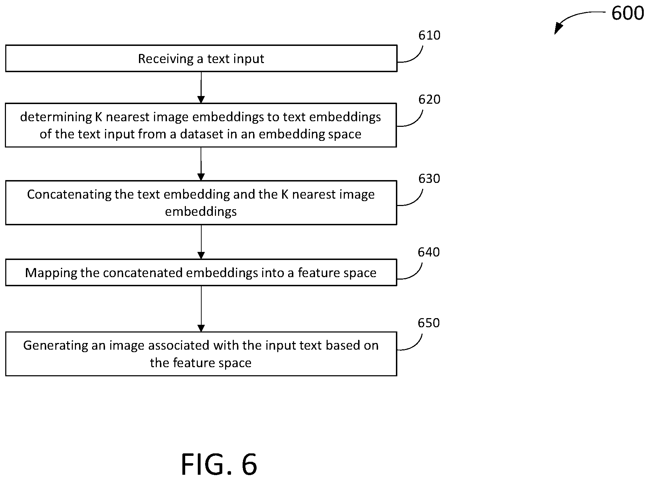

FIG. 6 is a flowchart of a method 600 for text-to-image generation using a KNN-diffusion model (at inference), according to one or more embodiments. The techniques described herein may be implemented as method(s) that are performed by physical computing device(s); as one or more non-transitory computer-readable storage media storing instructions which, when executed by computing device(s), cause performance of the method(s); or as physical computing device(s) that are specially configured with a combination of hardware and software that causes performance of the method(s).

In some embodiments, one or more of the steps in method 600 may be performed by one or more of the modules 510, 520, 530, 540, and 550. In some implementations, one or more operation blocks of FIG. 6 may be performed by a processor circuit executing instructions stored in a memory circuit, in a client device, a remote server or a database, communicatively coupled through a network. In some embodiments, methods consistent with the present disclosure may include at least one or more operations as in method 600 performed in a different order, simultaneously, quasisimultaneously or overlapping in time.

As shown in FIG. 6, at operation 610, the method 600 includes receiving a text input.

At operation 620, the method 600 includes determining K nearest image embeddings to text embeddings of the text input from a dataset in an embedding space.

At operation 630, the method 600 includes concatenating the text embedding and the K nearest image embeddings.

At operation 640, the method 600 includes mapping the concatenated embeddings into a feature space.

At operation 650, the method 600 includes generating an image associated with the input text based on the feature space.

Although FIG. 6 shows example blocks of the method 600, in some implementations, the method 600 may include additional blocks, fewer blocks, different blocks, or differently arranged blocks than those depicted in FIG. 6. Additionally, or alternatively, two or more of the blocks of the method may be performed in parallel.

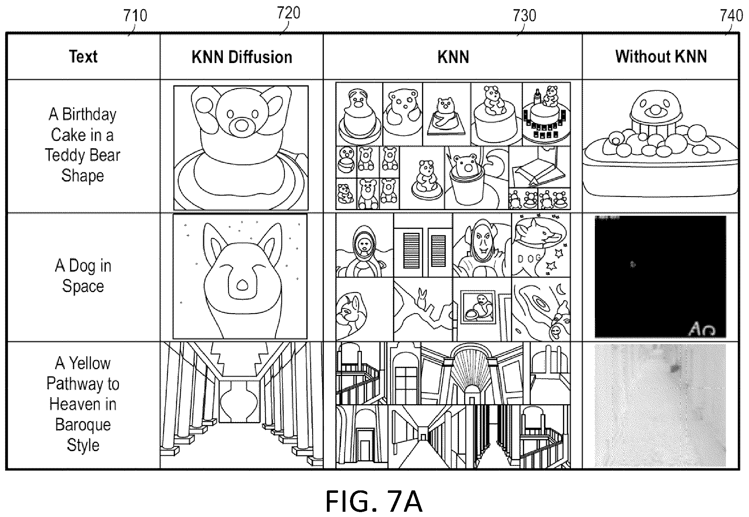

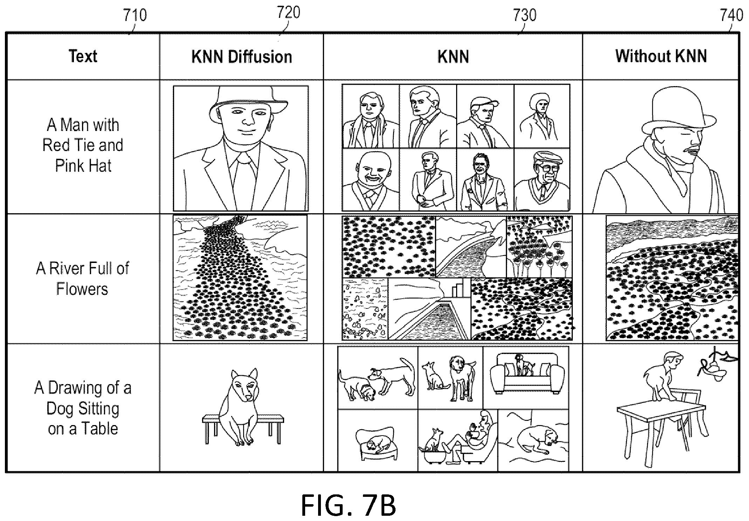

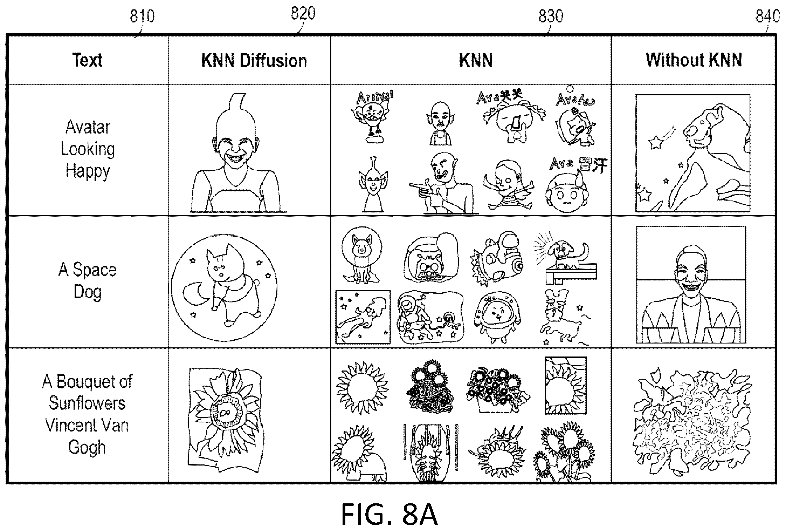

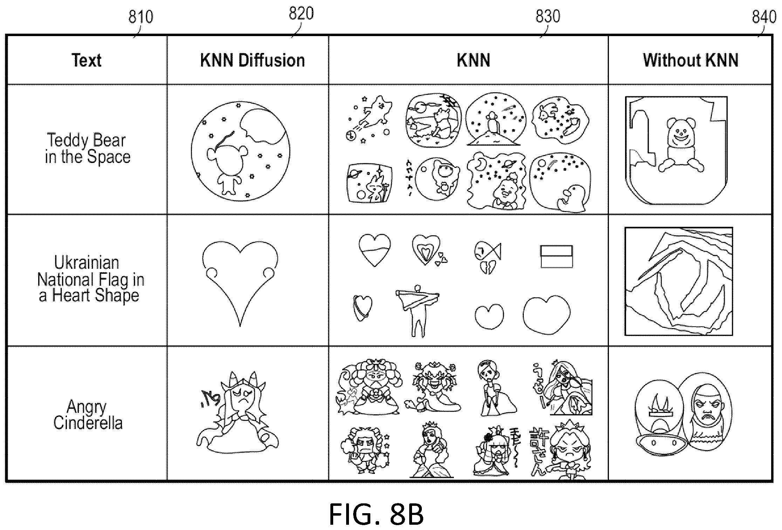

The KNN-Diffusion based text-image generation network (also referred to as the KNN-Diffusion model) in accordance with embodiments provide an improvement over related systems. The KNN-Diffusion model may be tested across various other models. The following different settings for experimentation/testing will be described in further detail: (i) comparison with text-to-image synthesis on photo-realistic datasets, (ii) comparison on a dataset composed of stickers, and (iii) an ablation study that justifies a method according to one or more embodiments. In addition to subjective and objective metrics, qualitative visual comparisons between the generated images according to each setting are illustrated in FIGS. 7A-7B and FIG. 8A-8B, further demonstrating the superiority of methods according to one or more embodiments.

For testing text-to-image synthesis on photo-realistic datasets, a set of one or more publicly available Text-Image datasets is used (e.g., a modified public multimodal dataset (PMD) which is composed of SBU Captions, Localized Narratives, Conceptual Captions, Visual Genome, Wikipedia Image Text, Conceptual Captions 12M, Red Caps, and a filtered version of YFCC100M). In total, the dataset contains 69 million text-image pairs. For photo-realistic experiments, the KNN-Diffusion model is evaluated on zero-shot text-to-image generation. Table 3 depicts a comparison between the KNN-Diffusion model with state-of-the-art zero-shot Text-To-Image generation methods. In this setting, KNN-Diffusion model generation is evaluated on a large-scale object detection, image segmentation, and captioning dataset without training on its training partition. Since the KNN-Diffusion model does not employ a post-generation re-ranking, Table 3 includes reports for model (models 1-2) scores without re-ranking. Human evaluation of generated images are compared to methods of embodiments and reported for methods with available online code.

In order to further demonstrate the advantages of the KNN-Diffusion model according to embodiments, a new dataset of stickers may also be collected and utilized for testing the KNN-Diffusion model. Stickers are small-size images, containing a combination of concepts such as objects, characters/avatars and text. As such, a dataset including stickers may be used, for example, a dataset of 400 million sticker images from the web. Stickers collected for the experimentation described herein do not have paired text and are substantially different from realistic photo data. In some implementations, since the stickers have no paired text, the CLIP model is not trained on those images, which makes the task of textless training for text-to-image more difficult. Therefore, in all experimentation described herein, only the images are used to train the KNN-Diffusion model and no textual data is used to train the model. For sticker generation evaluation/experiments, 500 random held out stickers are annotated and used as the dataset for the benchmark.

Evaluation metrics may be based on subjective and objective success metrics. For example, Fréchet Inception Distance (FID) is an objective metric used to assess the quality of computersynthesized images, and human evaluation (i.e., asking human raters for their preference comparing two methods) is a subjective metric. For purposes of experiments described herein, the human raters are asked to evaluate image quality and text alignment based on 500 image pairs wherein five raters rated each pair. The results are shown as a percentage of majority votes in favor of the KNN-Diffusion method over the baselines.

Table 3 evaluates methods of embodiments versus various strong zero-shot text-to-image models (i.e., models 1-6) trained on paired text-image datasets. The datasets may be, for example, DALL.E, CogView, VQDiffusion, and GLIDE, respectively. The results for zero-shot Text-To-Image generation are on a COCO dataset. The FID scores are calculated on a subset of 30,000 images from COCO validation set. Image-quality and Text-alignment report the percent human raters preference with regard to the KNN-Diffusion model.

Table 3: KNN-Diffusion Model (KNNDM) vs. Other Text-To-Image Models

| | Model | FID↓ | Image -quality | Text -alignment |
|---|---|---|---|---|
| Paired | Model 1 | 34.6 | - | - |
| | Model 2 | 36.53 | 0.92 | 0.84 |
| | Model 3 | 19.75 | 0.67 | 0.8 |
| | Model 4 | 12.24 | - | - |
| Image-Only | Model 5 | 26.94 | - | - |
| | Model 6 | 21.16 | 0.64 | 0.79 |
| | KNNDM | 16.66 | - | - |

As shown in Table 3, the KNN-Diffusion model achieves better FID scores and is preferred by human raters than the first three baselines while training on an image-only dataset. Models 1-4 are trained on paired datasets. Models 5-6, and the KNNDM of embodiments, are trained on image datasets. Model 4 is trained on a large dataset. Specifically, model 4 is trained on 250 million text and images. In contrast, in this experimentation, the KNN-Diffusion model is trained on 70 million images. Therefore, compared to model 4, the KNN-Diffusion model reaches comparable results while training on a smaller dataset. As mentioned, models 5-6 are trained with image-only datasets, i.e., datasets containing only images. Nonetheless, as shown in Table 3, the KNN-Diffusion model achieves better subjective and objective scores, surpassing the FID score of model 5. Additionally, the human evaluation rate shows that the KNN-Diffusion model is better aligned to text input compared to model 6, which is a model that directly optimizes the generated image with a text-image alignment criterion.

FIGS. 7A-7B illustrate various examples of a qualitative evaluation of the text-to-image generation methods. FIGS. 7A-7B illustrate various examples of a qualitative evaluation of the text-to-image generation methods. The text 710 is the input text. KNN-Diffusion 720 is the output image results from the KNN-diffusion model according to embodiments. KNN 730 is the K-nearest-neighbors retrieved from the real image dataset based on the text 710 and used to generate the output image results of the KNN-Diffusion 720. Without KNN 740 is the output image results from an implementation of the image generation network (e.g., system 200) without the KNN component. As shown in FIGS. 7A-7B, the results of the KNN-Diffusion model are far superior in terms of quality and faithfulness to the input text, compared to when the output image is generated without the KNN images.

The sticker dataset provides further demonstration of the advantages to the KNN-Diffusion model on an image-only dataset. The KNN-Diffusion model is compared with two baselines. For the first baseline, KNN is omitted from the image generation network according to embodiments (i.e., "Without KNN"). During training, this baseline generates images from image embeddings, while during inference, images are generated from text embeddings. Model 4 is a text-based baseline. To this end, the entire sticker dataset is captioned using ClipCap which is a CLIP prefix for image captioning. Model 4 utilizes a similar multi-modal embedding model used in the KNN-Diffusion model for retrieval. Model 4 uses a captioned dataset to train 800 million parameters of the model, making it size-comparable with the 300 million parameters KNN-Diffusion model.

Table 4 shows results for text-to-image generation on the stickers dataset. The results of Table 4 also show the percent of human raters preferring the KNN-Diffusion model, according to embodiments, over the baselines with regard to image quality and alignment to a text prompt.

Table 4: Text-To-Image Generation On The Stickers Dataset

| Model | Image -quality | Text -alignment |
|---|---|---|
| Model 4 | 0.89 | 0.77 |
| Without KNN | 0.72 | 0.63 |

Table 4 shows human preference scores. However, objective scores are omitted for this experiment since there are no captions matching the ground truth images. Therefore, the models cannot be conditionally sampled. Comparison with the "Without KNN" baseline emphasizes the importance of the KNN component in an image generation network described in one or more embodiments. As shown in Table 4, the KNN-Diffusion model outperforms model 4 when trained on the synthetic paired sticker dataset. The results show that the synthetic captions are missing attributes such as exact style (e.g., photo-realistic), names of figures, and painters. As a result, the text-based baseline loses attributes when training on synthetic prompts while generation from an image embedding can capture those attributes.

FIGS. 8A-8B illustrate various examples of a qualitative evaluation of the text-to-sticker generation methods. The text 810 is the input text. Image generation results of an image generation network the Without KNN 840 is compared to the KNN-Diffusion 820 output stickers. KNN 830 is the K-nearest-neighbor stickers retrieved from the sticker dataset based on the text 810 and used to generate the output stickers through KNN-Diffusion 820. As shown in FIGS. 8A-8B, the output stickers (i.e., results of KNN-Diffusion 820) result in stickers with improved quality and that are more faithful to the input text. Furthermore, the Without KNN 840 image generation results fail with respect to both image quality and text-alignment.

The experiments also include an ablation study to quantify the contribution of the number of nearest neighbors used. The experiments are performed on the modified PMD dataset, and FID scores are reported on the COCO dataset.

Table 5 shows the ablation study results. The FID scores are calculated on a subset of 30,000 images from the COCO validation set. No KNN baseline was trained on noised image embedding $f_{img}(I)$ and using the text embedding during inference $f_{txt}(t)$. The remaining of the baselines in Table 5 employ 1, 10, 100, and 1000 neighbors during inference.

Table 5: Ablation Study Results

| Model | FID↓ |
|---|---|
| **No KNN** | 38.2 |
| **1-NN** | 17.07 |
| **10-NN** | 16.66 |
| **100-NN** | 18.9 |
| **1000-NN** | 21.72 |

The first baseline, which is denote "No KNN", follows LAFITE by training the model with a noised embedding of the image I, that is $f_{img}(I)$, instead of KNN. During inference, KNN is not employed either, but instead the model is conditioned on the text input t, that is $f_{txt}(t)$. The results in Table 5 demonstrate the importance of applying the retrieval mechanism during training and inference based on the significant improvement in the FID scores in the other baselines compared to the No KNN baseline.

Next, the KNN-Diffusion model is evaluated with a different number of KNNs during inference (i.e., 1, 10, 100, and 1000 nearest neighbors). The best performance is achieved using 10 neighbors.

According to some embodiments, the large-scale KNN search may use the implementation of FAISS. In some implementations, given a text embedding of the input text, a single query on a dataset of 400 million image embeddings may take 100 milliseconds on a single CPU server with 128GB RAM. 100 diffusion steps on the returned K image embeddings may take 8 seconds on an NVIDIA A100 GPU server (1 core). This is compared, for example, to a similar-sized GLIDE baseline model (i.e., model 4 in Tables 3-4) re-implemented which performs 250 steps at 19 seconds for the base-model, and an additional 27 seconds for the super-resolution-model. The GLIDE baseline is slower due to more diffusion steps that operate on the raw pixels rather than on the token space. As such, embodiments described herein provide improved picture quality, faithfulness, as well as processing efficiency. Additionally, collecting more training data, increasing the model size, and optimizing it may be the typical approach to improving models. However, it is limited. Methods according to embodiments adapt to new samples, which are only observed during test time (inference) by combining a large-scale diffusion-based generative model with a large-scale K-Nearest Neighbor search.

Hardware Overview

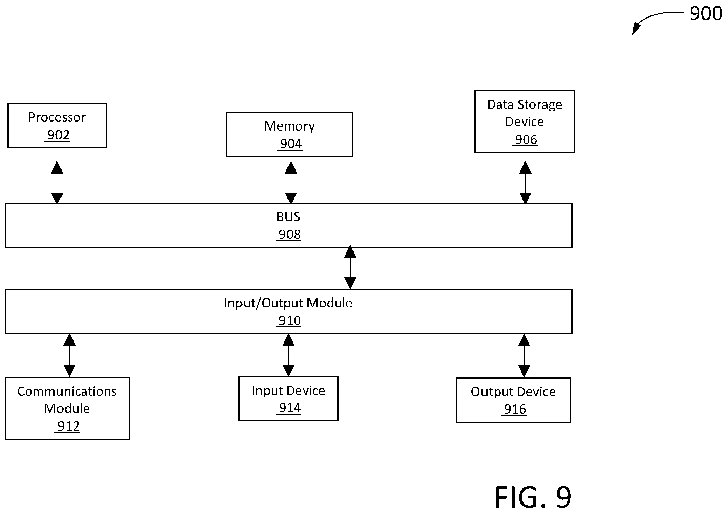

FIG. 9 is a block diagram illustrating an exemplary computer system 900 with which the user and platform of FIG. 1, and method(s) described herein can be implemented. In certain aspects, the computer system 900 may be implemented using hardware or a combination of software and hardware, either in a dedicated server, or integrated into another entity, or distributed across multiple entities. Computer system 900 may include a desktop computer, a laptop computer, a tablet, a phablet, a smartphone, a feature phone, a server computer, or otherwise. A server computer may be located remotely in a data center or be stored locally.

Computer system 900 (*e.g.,* user device 110 and computing environment 122) includes a bus 908 or other communication mechanism for communicating information, and a processor 902 coupled with bus 908 for processing information. By way of example, the computer system 900 may be implemented with one or more processors 902. Processor 902 may be a general-purpose microprocessor, a microcontroller, a Digital Signal Processor (DSP), an Application Specific Integrated Circuit (ASIC), a Field Programmable Gate Array (FPGA), a Programmable Logic Device (PLD), a controller, a state machine, gated logic, discrete hardware components, or any other suitable entity that can perform calculations or other manipulations of information.

Computer system 900 can include, in addition to hardware, code that creates an execution environment for the computer program in question, e.g., code that constitutes processor firmware, a protocol stack, a database management system, an operating system, or a combination of one or more of them stored in an included memory 904, such as a Random Access Memory (RAM), a Flash Memory, a Read-Only Memory (ROM), a Programmable Read-Only Memory (PROM), an Erasable PROM (EPROM), registers, a hard disk, a removable disk, a CD-ROM, a DVD, or any other suitable storage device, coupled to bus 908 for storing information and instructions to be executed by processor 902. The processor 902 and the memory 904 can be supplemented by, or incorporated in, special purpose logic circuitry.

The instructions may be stored in the memory 904 and implemented in one or more computer program products, e.g., one or more modules of computer program instructions encoded on a computer-readable medium for execution by, or to control the operation of, the computer system 900, and according to any method well-known to those of skill in the art, including, but not limited to, computer languages such as data-oriented languages (*e.g.,* SQL, dBase), system languages (*e.g.,* C, Objective-C, C++, Assembly), architectural languages (*e.g.,* Java, .NET), and application languages (*e.g.,* PHP, Ruby, Perl, Python). Instructions may also be implemented in computer languages such as array languages, aspect-oriented languages, assembly languages, authoring languages, command line interface languages, compiled languages, concurrent languages, curlybracket languages, dataflow languages, data-structured languages, declarative languages, esoteric languages, extension languages, fourth-generation languages, functional languages, interactive mode languages, interpreted languages, iterative languages, list-based languages, little languages, logicbased languages, machine languages, macro languages, metaprogramming languages, multiparadigm languages, numerical analysis, non-English-based languages, object-oriented class-based languages, object-oriented prototype-based languages, offside rule languages, procedural languages, reflective languages, rule-based languages, scripting languages, stackbased languages, synchronous languages, syntax handling languages, visual languages, wirth languages, and xmlbased languages. Memory 904 may also be used for storing temporary variable or other intermediate information during execution of instructions to be executed by processor 902.

A computer program as discussed herein does not necessarily correspond to a file in a file system. A program can be stored in a portion of a file that holds other programs or data (*e.g.,* one or more scripts stored in a markup language document), in a single file dedicated to the program in question, or in multiple coordinated files (*e.g.,* files that store one or more modules, subprograms, or portions of code). A computer program can be deployed to be executed on one computer or on multiple computers that are located at one site or distributed across multiple sites and interconnected by a communication network. The processes and logic flows described in this specification can be performed by one or more programmable processors executing one or more computer programs to perform functions by operating on input data and generating output.

Computer system 900 further includes a data storage device 906 such as a magnetic disk or optical disk, coupled to bus 908 for storing information and instructions. Computer system 900 may be coupled via input/output module 910 to various devices. Input/output module 910 can be any input/output module. Exemplary input/output modules 910 include data ports such as USB ports. The input/output module 910 is configured to connect to a communications module 912. Exemplary communications modules 912 (*e.g.,* communications modules 218) include networking interface cards, such as Ethernet cards and modems. In certain aspects, input/output module 910 is configured to connect to a plurality of devices, such as an input device 914 (*e.g.,* user device 110) and/or an output device 916 (*e.g.,* user device 110). Exemplary input devices 914 include a keyboard and a pointing device, *e.g.,* a mouse or a trackball, by which a user can provide input to the computer system 900. Other kinds of input devices 914 can be used to provide for interaction with a user as well, such as a tactile input device, visual input device, audio input device, or brain-computer interface device. For example, feedback provided to the user can be any form of sensory feedback, e.g., visual feedback, auditory feedback, or tactile feedback; and input from the user can be received in any form, including acoustic, speech, tactile, or brain wave input. Exemplary output devices 916 include display devices, such as an LCD (liquid crystal display) monitor, for displaying information to the user.

According to one aspect of the present disclosure, the user device 110 and platform 120 can be implemented using a computer system 900 in response to processor 902 executing one or more sequences of one or more instructions contained in memory 904. Such instructions may be read into memory 904 from another machine-readable medium, such as data storage device 906. Execution of the sequences of instructions contained in main memory 904 causes processor 902 to perform the process steps described herein. One or more processors in a multi-processing arrangement may also be employed to execute the sequences of instructions contained in memory 904. In alternative aspects, hard-wired circuitry may be used in place of or in combination with software instructions to implement various aspects of the present disclosure. Thus, aspects of the present disclosure are not limited to any specific combination of hardware circuitry and software.

Various aspects of the subject matter described in this specification can be implemented in a computing system that includes a back-end component, *e.g.,* a data server, or that includes a middleware component, *e.g.,* an application server, or that includes a front-end component, *e.g.,* a client computer having a graphical user interface or a Web browser through which a user can interact with an implementation of the subject matter described in this specification, or any combination of one or more such back-end, middleware, or front-end components. The components of the system can be interconnected by any form or medium of digital data communication, *e.g.,* a communication network. The communication network (*e.g.,* network 150) can include, for example, any one or more of a LAN, a WAN, the Internet, and the like. Further, the communication network can include, but is not limited to, for example, any one or more of the following tool topologies, including a bus network, a star network, a ring network, a mesh network, a star-bus network, tree or hierarchical network, or the like. The communications modules can be, for example, modems or Ethernet cards.

Computer system 900 can include clients and servers. A client and server are generally remote from each other and typically interact through a communication network. The relationship of client and server arises by virtue of computer programs running on the respective computers and having a client-server relationship to each other. Computer system 900 can be, for example, and without limitation, a desktop computer, laptop computer, or tablet computer. Computer system 900 can also be embedded in another device, for example, and without limitation, a mobile telephone, a PDA, a mobile audio player, a Global Positioning System (GPS) receiver, a video game console, and/or a television set top box.

The term "machine-readable storage medium" or "computer-readable medium" as used herein refers to any medium or media that participates in providing instructions to processor 902 for execution. Such a medium may take many forms, including, but not limited to, non-volatile media, volatile media, and transmission media. Non-volatile media include, for example, optical or magnetic disks, such as data storage device 906. Volatile media include dynamic memory, such as memory 904. Transmission media include coaxial cables, copper wire, and fiber optics, including the wires forming bus 908. Common forms of machine-readable media include, for example, floppy disk, a flexible disk, hard disk, magnetic tape, any other magnetic medium, a CD-ROM, DVD, any other optical medium, punch cards, paper tape, any other physical medium with patterns of holes, a RAM, a PROM, an EPROM, a FLASH EPROM, any other memory chip or cartridge, or any other medium from which a computer can read. The machine-readable storage medium can be a machine-readable storage device, a machine-readable storage substrate, a memory device, a composition of matter affecting a machine-readable propagated signal, or a combination of one or more of them.

To illustrate the interchangeability of hardware and software, items such as the various illustrative blocks, modules, components, methods, operations, instructions, and algorithms have been described generally in terms of their functionality. Whether such functionality is implemented as hardware, software, or a combination of hardware and software depends upon the particular application and design constraints imposed on the overall system. Skilled artisans may implement the described functionality in varying ways for each particular application.

As used herein, the phrase "at least one of" preceding a series of items, with the terms "and" or "or" to separate any of the items, modifies the list as a whole, rather than each member of the list (*i.e.,* each item). The phrase "at least one of" does not require selection of at least one item; rather, the phrase allows a meaning that includes at least one of any one of the items, and/or at least one of any combination of the items, and/or at least one of each of the items. By way of example, the phrases "at least one of A, B, and C" or "at least one of A, B, or C" each refer to only A, only B, or only C; any combination of A, B, and C; and/or at least one of each of A, B, and C.

To the extent that the term "include," "have," or the like is used in the description or the claims, such term is intended to be inclusive in a manner similar to the term "comprise" as "comprise" is interpreted when employed as a transitional word in a claim. The word "exemplary" is used herein to mean "serving as an example, instance, or illustration." Any embodiment described herein as "exemplary" is not necessarily to be construed as preferred or advantageous over other embodiments.

A reference to an element in the singular is not intended to mean "one and only one" unless specifically stated, but rather "one or more." All structural and functional equivalents to the elements of the various configurations described throughout this disclosure that are known or later come to be known to those of ordinary skill in the art are intended to be encompassed by the subject technology. Moreover, nothing disclosed herein is intended to be dedicated to the public regardless of whether such disclosure is explicitly recited in the above description.

While this specification contains many specifics, these should not be construed as limitations on the scope of what may be claimed, but rather as descriptions of particular implementations of the subject matter. Certain features that are described in this specification in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations and even initially claimed as such, one or more features from a claimed combination can in some cases be excised from the combination, and the claimed combination may be directed to a subcombination or variation of a subcombination.

The subject matter of this specification has been described in terms of particular aspects, but other aspects can be implemented and are within the scope of the following claims. For example, while operations are depicted in the drawings in a particular order, this should not be understood as requiring that such operations be performed in the particular order shown or in sequential order, or that all illustrated operations be performed, to achieve desirable results. The actions recited in the claims can be performed in a different order and still achieve desirable results. As one example, the processes depicted in the accompanying figures do not necessarily require the particular order shown, or sequential order, to achieve desirable results. In certain circumstances, multitasking and parallel processing may be advantageous. Moreover, the separation of various system components in the aspects described above should not be understood as requiring such separation in all aspects, and it should be understood that the described program components and systems can generally be integrated together in a single software product or packaged into multiple software products. Other variations are within the scope of the following claims.

**Claims**

1.  A computer-implemented method, performed by at least one processor, for text-to-image generation using a KNN-diffusion model, the method comprising:

    receiving a text input;
    determining K nearest image embeddings, to text embeddings of the text input, from a dataset in an embedding space;
    concatenating the text embedding and the K nearest image embeddings;
    mapping the concatenated embeddings into a feature space; and
    generating an image associated with the text input based on the feature space.

2.  The computer-implemented method of claim 1, further comprising extracting a text embedding from the text input.

3.  The computer-implemented method of claim 1 or claim 2, wherein the dataset is a sticker dataset and the image is a sticker associated with the text input.

4.  The computer-implemented method of claim 1, claim 2 or claim 3, further comprising determining the K nearest image embeddings from image samples in the dataset based on an index, wherein the image samples are indexed by a fast KNN-search.

5.  The computer-implemented method of any one of the preceding claims, further comprising encoding the text input using a pre-trained text encoder to generate the text embedding.

6.  The computer-implemented method of any one of the preceding claims, wherein the K nearest image embeddings are retrieved from K nearest images in a Contrastive Language-Image Pretraining (CLIP) embedding space.

7.  The computer-implemented method of any one of the preceding claims, wherein the feature space is a joint multi-modal text-image space.

8.  The computer-implemented method of any one of the preceding claims, further comprising initializing the image embedding with a mask token.

9.  The computer-implemented method of any one of the preceding claims, further comprising training the KNN-diffusion model, wherein the training comprises:

sampling an input image based on a sample time step;
determining K nearest image embeddings to the input image from a training dataset; and
concatenating an input image embedding and the K nearest image embeddings to the input image.

10. The computer-implemented method of any one of the preceding claims, further comprising:

generating conditional image logits based on a desired multi-modal embedding and unconditional image logits based on a null embedding; and
sampling the input image based on the conditional image logits, the unconditional image logits, and a scaling coefficient.

11. A system for text-to-image generation using a KNN-diffusion model, the system comprising:

one or more processors; and
a memory storing instructions which, when executed by the one or more processors, cause the system to:

receive a text input;
extract a text embedding from the text input;
determine K nearest image embeddings to the text embedding from a dataset in an embedding space;
concatenate the text embedding and the K nearest image embeddings;
map the concatenated embeddings into a feature space; and
generate an image associated with the text input based on the feature space.

12. The system of claim 11, wherein the feature space is a joint multi-modal text-image space; and/or preferably, wherein the dataset is a sticker dataset and the image is a sticker associated with the text input.

13. The system of claim 11 or claim 12, wherein the one or more processors further execute instructions to one or more of:

i. determine the K nearest image embeddings from image samples in the dataset based on an index, wherein the image samples are indexed by a fast KNN-search;
ii. encode the text input using a pre-trained text encoder to generate the text embedding;
iii. initialize the image embedding with a mask token;
iv. train the KNN-diffusion model, the instructions causing the system to:

sample an input image based on a sample time step;
determine K nearest image embeddings to the input image from a training dataset; and
concatenate an input image embedding and the K nearest image embeddings to the input image;

v. generate conditional image logits based on a desired multi-modal embedding and unconditional image logits based on a null embedding; and
sample the input image based on the conditional image logits, the unconditional image logits, and a scaling coefficient.

14. The system of claim 11, claim 12 or claim 13, wherein the K nearest image embeddings are retrieved from K nearest images in a Contrastive Language-Image Pretraining (CLIP) embedding space.

15. A non-transient computer-readable storage medium having instructions embodied thereon, the instructions being executable by one or more processors to perform a method for text-to-image generation using a KNN-diffusion model and cause the one or more processors to:

receive a text input;
extract a text embedding from the text input;
determine K nearest image embeddings to the text embedding from a dataset in an embedding space;
concatenate the text embedding and the K nearest image embeddings;
map the concatenated embeddings into a joint multi-modal text-image space; and
generate an image associated with the text input based on the joint multi-modal text-image space.

FIG. 1

FIG. 2

FIG. 3B

FIG. 3A

$$Q_n = \begin{bmatrix} \alpha_n + \beta_n & \beta_n & \beta_n & \cdots & 0 \\ \beta_n & \alpha_n + \beta_n & \beta_n & \cdots & 0 \\ \beta_n & \beta_n & \alpha_n + \beta_n & \cdots & 0 \\ \vdots & \vdots & \vdots & \ddots & \vdots \\ \gamma_n & \gamma_n & \gamma_n & \cdots & 1 \end{bmatrix}$$

FIG. 4

500

| Receiving Module | 510 |
| Determining Module | 520 |
| Concatenating Module | 530 |
| Mapping Module | 540 |
| Generating Module | 550 |

FIG. 5

FIG. 6

EP 4 432 130 A1

| Text | KNN Diffusion | KNN | Without KNN |
|------|---------------|-----|-------------|
| A Birthday Cake in a Teddy Bear Shape | | | |
| A Dog in Space | | | |
| A Yellow Pathway to Heaven in Baroque Style | | | |

FIG. 7A

FIG. 7B

EP 4 432 130 A1

FIG. 8A

| Text | KNN Diffusion | KNN | Without KNN |
|------|---------------|-----|-------------|
| Teddy Bear in the Space | | | |
| Ukrainian National Flag in a Heart Shape | | | |
| Angry Cinderella | | | |

FIG. 8B

FIG. 9

EP 4 432 130 A1

**EP 4 432 130 A1**

<table>
<tr><td colspan="2"><strong>Europäisches Patentamt</strong><br><strong>European Patent Office</strong><br><strong>Office européen des brevets</strong></td><td align="center"><strong>EUROPEAN SEARCH REPORT</strong></td><td><strong>Application Number</strong><br><br>EP 24 15 5143</td></tr>
</table>

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Sheynin Shelly ET AL: "KNN-Diffusion: Image Generation via Large-Scale Retrieval", arXiv (Cornell University), 2 October 2022 (2022-10-02), pages 1-26, XP093177162, DOI: 10.48550/arxiv.2204.02849 Retrieved from the Internet: URL:https://arxiv.org/pdf/2204.02849 * abstract * * page 5, line 20 - line 21 * * page 5, line 26 - line 28 * * page 15, line 19 - line 24 * * page 18, line 5 - line 8 * * figure 5 * * Algorithm 2 * ----- | 1-15 | INV.<br>G06F16/9032<br>G06F16/903<br>G06F16/906 |
| A | Chen Wenhu ET AL: "Re-Imagen: Retrieval-Augmented Text-to-Image Generator", arXiv (Cornell University), 22 November 2022 (2022-11-22), pages 1-25, XP93177617, DOI: 10.48550/arxiv.2209.14491 Retrieved from the Internet: URL:https://arxiv.org/pdf/2209.14491 * abstract * * Section 2 * * Section 3.2 * * Section 4.1 * * figures 2,3 * ----- -/-- | 1-15 | TECHNICAL FIELDS SEARCHED (IPC)<br><br>G06F |

The present search report has been drawn up for all claims

| Place of search | Date of completion of the search | Examiner |
|---|---|---|
| Berlin | 21 June 2024 | Pose Rodríguez, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | Ulhaq Anwaar ET AL: "Efficient Diffusion Models for Vision: A Survey", arxiv, 7 October 2022 (2022-10-07), pages 1-14, XP093177618, Retrieved from the Internet: URL:https://arxiv.org/pdf/2210.09292v1 * the whole document * <br> ----- | 1-15 | |
| | | | **TECHNICAL FIELDS SEARCHED (IPC)** |

The present search report has been drawn up for all claims

| Place of search | Date of completion of the search | Examiner |
|---|---|---|
| Berlin | 21 June 2024 | Pose Rodríguez, J |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
................................................................
& : member of the same patent family, corresponding
    document

EPO FORM 1503 03.82 (P04C01)